# FASCICULE DE BREVET EUROPEEN

(11) **EP 0 936 263 B1**
(45) Date de publication et mention de la délivrance du brevet: **15.01.2003**
(21) Numéro de dépôt: 99400266.5
(22) Date de dépôt: 05.02.1999
(51) Int. Cl.: C09K 7/02

(54) **Boue de forage à base de bentonite et procédé de forage la mettant en oeuvre**
Bentonit basierter Bohrschlamm und Bohrverfahren
Bentonite based drilling mud and drilling process using it

(30) Priorité: 10.02.1998 FR 9801529
(43) Date de publication de la demande: 18.08.1999
(73) Titulaire: COMPAGNIE DU SOL, 92000 Nanterre (FR)
(72) Inventeur: Michelson, Alberte, 77210 Avon (FR); Vattement, Hubert, 77130 Montereau (FR)
(74) Mandataire: Nevant, Marc

(56) Documents cités:
- DE-A- 1 719 428
- DE-A- 4 404 219
- GB-A- 1 146 245
- GB-A- 2 293 373

## Description

La présente invention concerne le domaine des boues de forage.

La majorité des bentonites pour boues de forage disponibles sur le marché sont des bentonites calciques rendues artificiellement sodiques par échange des ions calcium naturellement présents dans la structure, par des ions sodium, en général par un traitement au carbonate de sodium en usine.

Les boues de forages préparées avec une bentonite sodique ont en effet des propriétés rhéologiques bien supérieures à celles de boues préparées avec une bentonite calcique.

Cependant, les caractéristiques rhéologiques des boues se dégradent au contact du calcium venant soit de la chaux du ciment, au cours d'un bétonnage par exemple, soit du calcium disponible dans le terrain comme du gypse par exemple.

Pour remédier à la détérioration des caractéristiques rhéologiques de la boue de forage au cours des travaux, on la traite habituellement au bicarbonate de sodium lorsqu'il y a pollution par la chaux du ciment ou au carbonate de sodium lorsqu'il y a pollution par le gypse. On élimine ainsi les ions calcium libres et mobiles de la boue de forage par précipitation de carbonate de calcium.

Ce traitement a l'inconvénient d'être provisoire, car le calcium en réserve dans le ciment ou dans le gypse passe en solution au fur et à mesure de la précipitation de carbonate de calcium.

Pour maintenir des caractéristiques rhéologiques convenables, une surveillance constante de la boue et une addition permanente de bicarbonate ou de carbonate de sodium sont nécessaires au cours des travaux.

De plus, le traitement de la boue au carbonate ou au bicarbonate de sodium est parfois suivi d'un épaississement et d'une rigidification indésirables de la boue due à une pollution par l'ion carbonate.

Un traitement complémentaire au polyacrylate de sodium, qui est un dispersant-fluidifiant, est alors nécessaire.

Les composés de type phosphonate sont connus comme défloculant dans les boues de forage contennant bentonite, voire GB-A-2 243 373.

La Demanderesse a trouvé, de manière inattendue, que l'incorporation de composés de type phosphonate dans les bentonites pour boues de forage permet de résoudre ces inconvénients. En particulier, cette incorporation permet :
- le blocage des ions calcium libres sous forme de complexes solubles et stables ;
- la conservation ou la restitution de la fluidité initiale de la boue : les phosphonates ont également, sur la boue, un effet dispersant-fluidifiant.

Ainsi, selon un premier aspect, l'invention concerne une boue de forage à base de bentonite, qui comprend un composé de type phosphonate.

Les bentonites pour boues de forage qu'il est possible d'utiliser dans le cadre de l'invention comprennent toutes les bentonites couramment employées dans ce domaine.

Les composés de type phosphonate à incorporer dans les boues de forage de l'invention répondent à la formule générale : 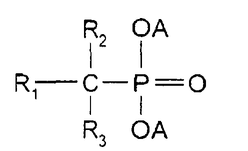 dans laquelle :
- R₁, R₂ et R₃, indépendamment les uns des autres, représentent l'hydrogène ; un hydroxy ; un (C₁-C₈)alkyle éventuellement substitué par un groupe -NR₄R₅ ou par un phényle ; un phényle ou un groupe phosphono ;
- R₂ et R₃ peuvent également former, avec l'atome de carbone auquel ils sont liés, un phényle ;
- R₄ et R₅, indépendamment l'un de l'autre, représentent l'hydrogène ; ou un (C₁-C₈)alkyle éventuellement substitué par un amino ;
- chaque A représente indépendamment l'hydrogène ; un atome de sodium ; ou un atome de potassium ;
ledit composé étant différent de l'acide aminotrisméthylènephosphonique.

A titre d'exemple de composés de type phosphonate avantageux pour la mise en oeuvre de l'invention, on peut citer notamment les sels de sodium ou de potassium des acides suivants :
- acide hydroxyéthylidène-1,1-diphosphonique
- acide éthylènediaminetétraméthylènephosphonique
- acide diéthylènetriaminepentaméthylènephosphonique
- acide hexaméthylènediaminetétraméthylènephosphonique
- acide octylphénylphosphonique

De préférence, on utilise de 0,2 à 10 parties en poids de composé de type phosphonate pour 100 parties en poids de bentonite.

Les boues de forage selon l'invention peuvent également contenir des additifs couramment utilisés dans ce domaine, comme par exemple du (bi)carbonate de sodium, à raison de 2 à 10 parties en poids d'additif pour 100 parties en poids de bentonite.

La boue de forage conforme à l'invention peut être préparée en mélangeant la bentonite et le composé de type phosphonate en présence d'eau.

Selon un mode de réalisation particulier de l'invention, la bentonite en poudre est prémélangée avec le composé de type phosphonate en poudre. On prépare alors la boue de forage à l'aide du mélange pulvérulent et d'eau.

L'invention concerne également un procédé de forage dans lequel on met en oeuvre la boue de forage telle que définie précédemment.

Les boues de forage selon l'invention possèdent des avantages essentiels par rapport aux boues conventionnelles :
- elles permettent un traitement durable,
- elles sont aussi efficaces en traitement préventif que curatif,
- elles permettent de remplacer deux produits par un seul,
- elles ont une durée de vie considérablement allongée,
- elles sont moins sensibles aux ions calcium qui provoquent une dégradation de leurs propriétés essentielles, notamment la filtration, et par voie de conséquence, leur aptitude à rendre les parois du forage étanches (ce qui en assure la stabilité).

L'invention sera mieux comprise à l'aide des exemples ci-après, donnés à titre purement illustratif.

### EXEMPLES

### Exemple 1 : Utilisation de phosphonates en traitement préventif

On prépare la boue de forage ayant la composition suivante :

| | |
|---|---|
| Eau | 1000 litres |
| Bentonite sodique | 45 kg |
| Phosphonate* | 3 litres (soit 2,3 kg pour 100 kg de bentonite) |

| | |
|---|---|
| * Solution d'acide hexaméthylenediaminetétraméthylènephosphonique, sel de potassium à 28 % (densité 1,24). | |

La boue ainsi traitée préventivement garde ses caractéristiques rhéologiques au contact du ciment.

### Exemple 2 : Utilisation de phosphonates en traitement curatif

Soit une boue de forage dosée à 50 kg de bentonite par m³ d'eau. Après la perforation des panneaux secondaires d'une paroi moulée, le calcium solubilisé du béton des panneaux primaires a entraîné une dégradation des propriétés rhéologiques de la boue.

A savoir :

| | |
|---|---|
| Filtrat | 82 ml |
| Cake | 7 mm |
| Viscosité MARSH | > 120 s |

Après traitement de la boue avec une solution d'acide diéthylènetriaminepentaméthylènephosphonique, sel de sodium (densité 1,33), à raison de 2 litres par m³ (soit 1 kg de phosphonate pour 100 kg de bentonite), les caractéristiques sont redevenues normales :

| | |
|---|---|
| Filtrat | 22 ml |
| Cake | 0,5 mm |
| Viscosité MARSH | 36 s |

### Exemple 3 : Traitement préventif de la bentonite sous forme de poudre

On mélange 6 parties en poids d'acide diéthylènetriaminepentaméthylènephosphonique, sel de sodium avec 100 parties en poids de bentonite en poudre.

Le mélange ainsi réalisé est utilisé pour fabriquer une boue de forage dosée à 40 kg de mélange par m³ d'eau.

Les caractéristiques de la boue ne subissent aucune modification après addition de 5 kg/m³ de ciment Portland alors que la même boue non traitée a toutes ses caractéristiques dégradées.

## Revendications

1. Boue de forage à base de bentonite, qui comprend un composé de type phosphonate de formule suivante : 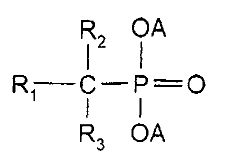 dans laquelle :
- R₁, R₂ et R₃, indépendamment les uns des autres, représentent l'hydrogène ; un hydroxy ; un (C₁-C₈)alkyle éventuellement substitué par un groupe -NR₄R₅ ou par un phényle ; un phényle ; ou un groupe phosphono ;
- R₂ et R₃ peuvent également former, avec l'atome de carbone auquel ils sont liés, un phényle ;
- R₄ et R₅, indépendamment l'un de l'autre, représentent l'hydrogène ; ou un (C₁-C₈)alkyle éventuellement substitué par un amino ;
- chaque A représente indépendamment l'hydrogène un atome de sodium ; ou un atome de potassium ;
ledit composé étant différent de l'acide aminotrisméthylènephosphonique.

2. Boue de forage selon la revendication 1, dans laquelle le composé de type phosphanate est choisi parmi les sels de sodium ou de potassium des acides suivants :
- acide hydroxyéthylidène-1,1-diphosphonique
- acide éthylènediaminetétraméthylènephosphonique
- acide diéthylènetriaminepentaméthylènephosphonique
- acide hexaméthylènediaminetétraméthylènephosphonique
- acide octylphénylphosphonique.

3. Boue de forage selon la revendication 2, dans laquelle le composé de type phosphonate est choisi parmi le sel de sodium ou de potassium de l'acide diéthylènetriaminepentaméthylènephosphonique ou de l'acide hexaméthylènediaminetétraméthylènephosphonique.

4. Boue de forage selon l'une des revendications 1 à 3, dans laquelle le composé de type phosphanate est présent à raison de 0,2 à 10 parties en poids pour 100 partie en poids de bentonite.

5. Boue de forage selon l'une des revendications 1 à 4, qui est obtenue à partir d'un prémélange de la bentonite et du composé de type phosphonate.

6. Procédé de forage, dans lequel on met en oeuvre la boue de forage selon l'une des revendications 1 à 5.

## Patentansprüche

1. Bohr-Schlamm auf Basis von Bentonit, enthaltend eine Verbindung vom Phosphonat-Typ der folgenden Formel: 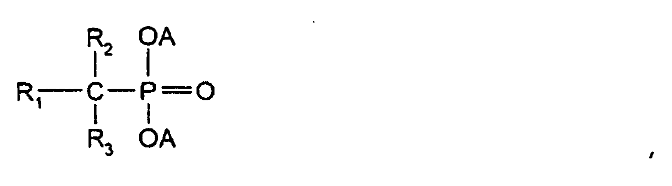 worin gilt:
- R₁, R₂ und R₃ stellen, unabhängig voneinander, Wasserstoff, Hydroxy, gegebenenfalls mit einer -NR₄R₅oder einer Phenyl-Gruppe substituiertes C₁₋₈-Alkyl, Phenyl oder eine Phosphono-Gruppe dar;
- R₂ und R₃ können auch mit dem Kohlenstoffatom, an das sie gebunden sind, einen Phenyl-Ring bilden;
- R₄ und R₅ stellen, unabhängig voneinander, Wasserstoff oder ein gegebenenfalls mit einer Aminogruppe substituiertes C₁₋₈-Alkyl dar;
- jeder Rest A stellt unabhängig Wasserstoff, ein Natrium- oder Kaliumatom dar,
wobei sich die genannte Verbindung von Aminotrismethylenphosphonsäure unterscheidet.

2. Bohr-Schlamm gemäß Anspruch 1, worin die Verbindung vom Phosphonat-Typ aus den Natrium- oder Kaliumsalzen der folgenden Säuren ausgewählt ist:
- Hydroxyethyliden-1,1-diphosphonsäure,
- Ethylendiamintetramethylenphosphonsäure,
- Diethylentriaminpentamethylenphosphonsäure,
- Hexamethylendiamintetramethylenphosphonsäure,
- Octylphenylphosphonsäure.

3. Bohr-Schlamm gemäß Anspruch 2, worin die Verbindung vom Phosphonat-Typ aus dem Natrium- oder Kaliumsalz der Diethylentriaminpentamethylenphosphonsäure oder der Hexamethylendiamintetramethylenphosphonsäure ausgewählt ist.

4. Bohr-Schlamm gemäß einem der Ansprüche 1 bis 3, worin die Verbindung vom Phosphonat-Typ in einer Menge von 0,2 bis 10 Gew.Teilen auf 100 Gew.Teile Bentonit vorhanden ist.

5. Bohr-Schlamm gemäß einem der Ansprüche 1 bis 4, welcher aus einer Vor-Mischung des Bentonits und der Verbindung vom Phosphonat-Typ erhalten wird.

6. Bohr-Verfahren, wobei man den Bohr-Schlamm gemäß einem der Ansprüche 1 bis 5 zur Anwendung bringt.

## Claims

1. A bentonite-based drilling mud which comprises a compound of the phosphonate type of the following formula: 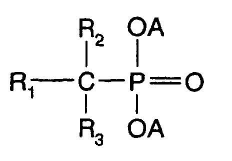 in which:
- R₁, R₂ and R₃ independently of one another are hydrogen; hydroxyl; (C₁-C₈)alkyl optionally substituted by a group -NR₄R₅ or by a phenyl; phenyl; or a phosphono group;
- R₂ and R₃ can also form a phenyl together with the carbon atom to which they are bonded;
- R₄ and R₅ independently of one another are hydrogen; or a (C₁-C₈)alkyl optionally substituted by an amino; and
- each A is independently hydrogen; a sodium atom; or a potassium atom, said compound being other than aminotrismethylenephosphonic acid.

2. A drilling mud according to claim 1 in which the compound of the phosphonate type is selected from the sodium or potassium salts of the following acids:
- hydroxyethylidene-1,1-diphosphonic acid
- ethylenediaminetetramethylenephosphonic acid
- diethylenetriaminepentamethylenephosphonic acid
- hexamethylenediaminetetramethylenephosphonic acid
- octylphenylphosphonic acid.

3. A drilling mud according to claim 2 in which the compound of the phosphonate type is selected from the sodium or potassium salt of diethylenetriaminepentamethylenephosphonic acid or hexamethylenediaminetetramethylenephosphonic acid.

4. A drilling mud according to one of claims 1 to 3 in which the compound of the phosphonate type is present in an amount of 0.2 to 10 parts by weight per 100 parts by weight of bentonite.

5. A drilling mud according to one of claims 1 to 4 which is obtained from a premix of bentonite and the compound of the phosphonate type.

6. A drilling process in which the drilling mud according to one of claims 1 to 5 is used.
